Europäisches Patentamt

(19) European Patent Office (11) Numéro de publication: **0 139 712**

Office européen des brevets **B1**

(12) **FASCICULE DE BREVET EUROPÉEN**

(45) Date de publication du fascicule du brevet: **20.07.88**

(51) Int. Cl.⁴: **B 29 C 65/06,** F 16 L 47/00, B 23 P 11/02

(21) Numéro de dépôt: **84901591.2**

(22) Date de dépôt: **18.04.84**

(86) Numéro de dépôt international: **PCT/FR 84/00108**

(87) Numéro de publication internationale: **WO 84/04069 (25.10.84 Gazette 84/25)**

(54) **PROCEDE D'ASSEMBLAGE DE PLUSIEURS ORGANES, NOTAMMENT D'ORGANES DE LIAISON POUR RACCORDS DE FLUIDE.**

(30) Priorité: **18.04.83 FR 8306306**

(43) Date de publication de la demande: **06.05.85 Bulletin 85/19**

(45) Mention de la délivrance du brevet: **20.07.88 Bulletin 88/29**

(84) Etats contractants désignés: **DE GB**

(56) Documents cité:
**CH-A-337 426**
**DE-A-2 218 287**
**FR-A-2 025 834**
**FR-A-2 056 366**
**FR-A-2 167 484**
**FR-A-2 232 240**
**FR-A-2 314 812**
**FR-A-2 390 966**
**FR-A-2 399 608**
**FR-A-2 452 366**

(73) Titulaire: **Legris- Société Anonyme dite, 29, rue de la Palestine, F-35014 Rennes Cedex (FR)**

(72) Inventeur: **LEGRIS, André, 18, rue des Professeurs Pellé, F-35000 Rennes (FR)**

(74) Mandataire: **Dubreuil, Annie, Cabinet DUBREUIL Le Suffren 17 rue des Peupliers, F-56100 Lorient (FR)**

## Description

La présente invention a pour objet un procédé d'assemblage de deux parties cylindriques de pièces orientables après assemblage notamment d'un support de raccord de fluide et de ses organes de liaison ainsi qu'un raccord pour fluide.

On connait des raccords dans lesquels des pièces en matières dures (métal, matières plastiques chargées de fibres de verre très dures, etc) sont emmanchées à force, par exemple avec des cannelures de retenue dans des corps en matière plus tendre notamment en matière plastique.

Avec ce procédé la matière demeure sous tension et très souvent, longtemps après elle se rompt de façon inacceptable et dangereuse pour la sécurité.

On connait aussi un procédé de montage de pièces dures notamment des inserts en métal dans des pièces en matière plus tendre au moyen des ultrasons; malheureusement ce procédé n'est pas utilisable lorsque les masses à insérer sont trop importantes ou lorsque les pièces sont trop longues.

De plus, il ne supprime pas toujours les tensions internes dans la matière plus tendre du corps, et les risques de rupture à longue échéance c'est-à-dire un à cinq ans sont toujours importantes, ce qui est inacceptable pour des raccords de fluide en raison de la sécurité.

Il existe d'autres procédés d'emmanchement d'inserts en particulier métalliques, dans lesquels l'accrochage dans la pièce de support est réalisé soit par expansion de l'insert après emmanchement, soit par élasticité dans le cas d'inserts fendus, soit par autotaraudage pour les inserts usinant leur accrochage par rotation. Toutefois ces procédés présentent tous le même défaut qui réside dans le fait de maintenir une forte tension entre les pièces après emmanchement, ce qui risque d'entraîner des ruptures à long terme.

Il est également connu d'insérer des pièces par surmoulage dans d'autres pièces lors de l'injection. Cependant ce procédé est coûteux car la mise en place des inserts dans le moule est manuelle, et, de ce fait, il pénalise les cadences de moulage.

Le demandeur avait lui même essayé de résoudre cette difficulté en utilisant un dispositif ayant fait l'objet du brevet FR-A-2 399 608 et dans lequel un embout muni d'une cannelure est monté à force dans un corps en matière plus tendre de telle sorte que l'entraînement en rotation relativement lente de la cannelure usine sa propre gorge dans le corps. Toutefois ce procédé n'a pas donné satisfaction en raison de la difficulté de réaliser une telle cannelure dans la matière dure par exemple du métal.

Par ailleurs on connait également les procédés de soudage par friction de deux pièces pressées en tournant l'une contre l'autre et qui s'échauffent jusqu'à ce qu'il se produise une fusion locale. Mais cela ne convient qu'à des matières identiques, dures ou tendres, mais jamais à deux matières de duretés différentes.

Or dans la présente invention, il s'agit bien d'utiliser un procédé pour le montage de raccords comportant des pièces dures notamment en métal dans une pièce ou un corps de moindre dureté, dans le but de créer un assemblage indestructible, durable dans le temps, résistant au vieillissement et aux chocs thermiques de l'ambiance régnant dans un lieu de travail ou à l'extérieur, à l'humidité et à l'eau atmosphérique.

Conformément à la présente invention, les organes qui sont constitués de matières de duretés différentes sont assemblés par emmanchement à force et l'un des organes est soumis à une rotation rapide de telle sorte que l'un des organes en matière de moindre dureté subit un échauffement localisé mettant en fusion la matière dudit organe, afin de rendre les deux organes intimement solidaires et orientables en réduisant presque totalement les tensions internes.

La présente invention permet de réaliser un montage de façon simple et fiable constituant ainsi un perfectionnement au brevet FR-A-2 399 608 correspondant à l'état de la technique selon le préambule des revendications 1 et 2.

L'organe en matière plus dure qui doit être monté dans le corps du raccord en matière de moindre dureté présente au moins une partie cylindrique et comporte sur la partie cylindrique destinée à l'emmanchement une ou plusieurs arêtes de faible hauteur, bien déterminée, proportionnelle au diamètre et à l'élasticité du corps de moindre dureté. Autour de chaque arête ou cannelure sont réalisée deux logements circonférentiels destinés à recueillir la matière en excédent. Le profil de l'arête ou de la cannelure est important et fonction de la résistance du corps de moindre dureté et de l'usure au montage. L'angle peut varier de 45° à 80° suivant les matières utilisées pour réaliser le corps.

L'invention concerne plus précisément un procédé d'assemblage de deux parties cylindriques de pièces orientables après assemblage, notamment d'un support de raccord de fluide et de ses organes de liaison, ces pièces étant constituées de matière de duretés différentes et destinées à être emmanchées l'une dans l'autre en force et de manière étanche; procédé caractérisé en ce qu'il consiste à réaliser sur la pièce la plus dure et sur la partie cylindrique de celle-ci, destinée à l'emmanchement, au moins une arête d'ancrage lisse de faible hauteur proportionnelle au diamètre et à l'élasticité de la pièce de moindre dureté, à réaliser autour de chacune de ces arêtes deux gorges de dégagement à mettre après l'emmanchement, l'une des pièces en rotation par rapport à l'autre, à une vitesse telle qu'elle provoque localement la fusion de la matière la moins dure; cette matière en fusion repoussée par l'arête d'ancrage dont la dureté est telle qu'elle conserve son profil, venant se loger dans les gorges de dégagement assurant ainsi une double fonction de solidarisation et d'étanchéité.

L'invention concerne également un raccord pour fluide comprenant un corps tubulaire dans lequel est monté à l'une de ses extrémités un organe de liaison fileté et à l'autre extrémité un organe de liaison constitué par une douille, le corps étant réalisé en une matière de moindre dureté que celle de la douille, caractérisé en ce que l'organe de liaison, qui est une pièce de révolution, présente à sa périphérie une arête circulaire située entre deux gorges de dégagement, cette arête étant délimitée par l'intersection d'une surface conique et d'un plan sécant avec l'axe dudit organe.

D'autres caractéristiques et avatanges de l'invention seront mieux compris à la lecture de la description qui va suivre de plusieurs modes de réalisation et en se référant aux dessins annexés, dans lesquels:

- la figure 1 est une vue en coupe partielle de l'assemblage d'un corps de raccord et de deux organes de liaison dont l'un est représenté avant l'opération d'entraînement en rotation.

- la figure 2 est une vue en coupe d'une extrémité d'un corps de raccord après assemblage et d'un organe de liaison après emmanchement et après l'opération d'entraînement en rotation.

- la figure 3 est une vue de dessus suivant la flèche F de la figure 2 d'un mode de réalisation de l'organe de liaison.

- la figure 4 est une vue de dessus suivant la flèche F de la figure 2 d'un autre mode de réalisation de l'organe de liaison.

- la figure 5 est une vue de profil à échelle agrandie de l'arête d'ancrage et des deux gorges de dégagement d'un organe de liaison.

- la figure 6 est une vue en coupe d'un autre mode d'assemblage d'un raccord comportant une arête et deux gorges de dégagement intérieures.

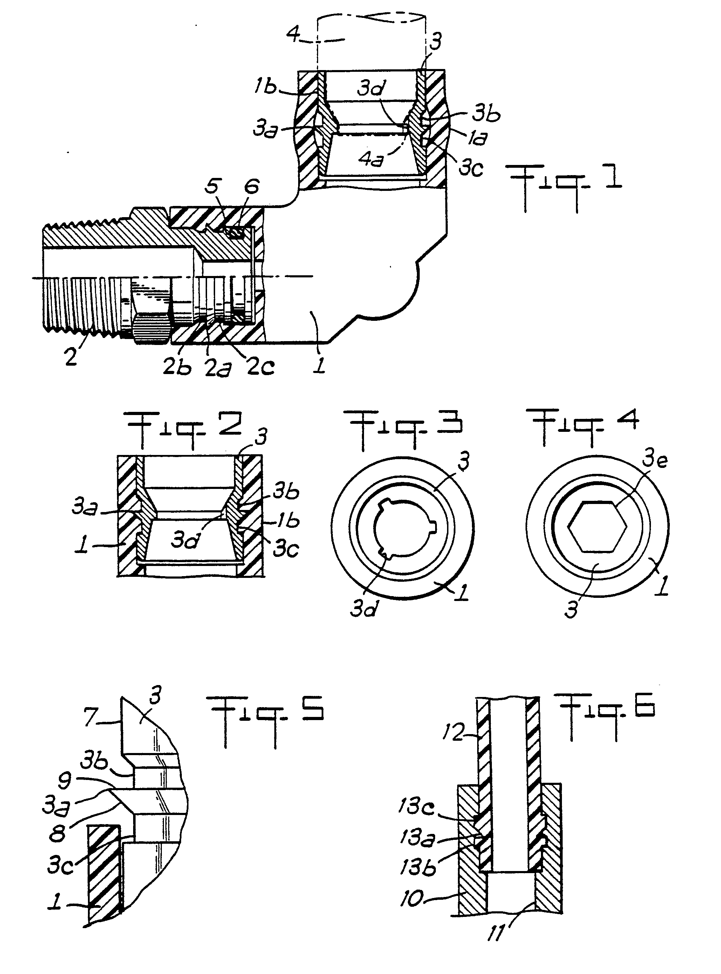

A la figure 1 on a représenté un raccord comprenant un corps tubulaire 1 dans lequel est monté à l'une de ses extrémités un organe de liaison fileté 2 et à l'autre extrémité un organe de liaison constitué par une douille 3 destinée à recevoir de façon connue un organe de raccordement notamment en forme de pince et qui n'est pas représenté au dessin.

Le corps 1 est réalisé en une matière de moindre dureté que celle des organes de liaison 2 et 3 constitués notamment de métal.

Les organes de liaison 2 et 3 qui sont des pièces de révolution présentent à leur périphérie une arête ou dent circulaire 2 a, 3a qui est située entre deux gorges de dégagement 2b, 2c et 3b, 3c.

Conformément au procédé suivant l'invention l'organe de laison 3 est emmanché à force ainsi qu'il est représenté à la figure 1, dans le corps 1 de moindre dureté qui se trouve ainsi sous tension, avec un effort important se produisant au sommet de l'arête 3a. L'arête 3 a provoque une déformation la par tension diamètrale dans l'alèsage 1b du corps 1, ladite tension initiale qui s'établit à l'emmanchement entre l'organe de liaison 3 et le corps 1 du raccord est provoquée par le surdimensionnement de l'arête d'ancrage 3a par rapport au logement dans lequel elle est emmanchée.

En général les matières employées pour réaliser des raccords sont assez dures elle-mêmes et il est nécessaire d'utiliser un insert en matière très dure tel qu'un métal pour obtenir une bonne qualité d'assemblage, l'arête ne pénétrant que très faiblement d'elle-même.

Ensuite l'organe de liaison 3 est entraîné en rotation par rapport au corps 1 qui est fixe et maintenu convenablement.

A cet effet, une broche d'entraînement 4 est engagée dans l'alèsage central de l'organe de liaison 3 (figure 1 et 3) présentant des rainures 3d, qui reçoivent des cannelures 4a de la broche 4 afin d'assurer la liaison en rotation de la broche et de l'organe de liaison.

Suivant un autre mode de réalisation représenté à la figure 4 l'organe de liaison 3 présente un trou 3e, de forme polygonale en section et dans lequel est engagé une broche d'entraînement 4 de section polygonale correspondante afin d'assurer la liaison en rotation.

La broche 4 qui est reliée à un organe moteur assure ainsi l'entraînement en rotation de l'organe de liaison à une vitesse pouvant varier de quelques centaines à plusieurs milliers de tours par minute en fonction de l'épaisseur du corps 1 dans laquelle l'insertion est réalisée. Le temps de rotation qui est calculé avec précision peut varier d'une à plusieurs secondes, suivant les épaisseurs et les matières en contact.

Or, la tension initiale locale entre l'arête 3a, et le corps 1, créée le frottement entre les deux pièces 3 et 4, qui pendant la rotation de l'organe de liaison 3 par rapport au corps 1, entraîne la fusion àu corps 1 dont la matière est moins dure dans la zone 1b. La matière en fusion vient se loger repoussée par l'arête 3a, dans les gorges 3b et 3c de l'organe de liaison. L'arête d'ancrage 3a ayant fait son logement toute la tension diamètrale 1a, est pratiquement résorbée ainsi qu'il est représenté à la figure 2.

La fusion due à la rotation, ne peut être obtenue qu'à une certaine vitesse de contact, nécessitant une vitesse de rotation minimale qui a été définie ci-dessus.

Ce procédé convient tout particulièrement pour les emmanchements dans les pièces dont l'épaisseur est relativement mince, ceci peut être dans le cas particulier de pièces en matière thermoplastique et en particulier avec des matières thermoplastiques chargées de fibres de verre.

A la figure 1 l'organe de liaison 2 est représenté dans sa position définitive après avoir subi l'opération de rotation et fusion.

L'organe de liaison 2 comporte une gorge 5 dans laquelle est engagé un joint d'étanchéité torique 6 qui permet également de faire pivoter le corps 1 par rapport à l'organe de liaison 2 de façon à obtenir en dehors de l'effet d'étanchéité de l'organe de liaison 2 par rapport au corps 1, une possibilité d'orientabilité.

Ceci permet de présenter par exemple la sortie en équerre de l'organe de liaison 3 tout autour de l'axe de l'organe 2 par simple rotation manuelle. Cette possibilité est très importante afin de pouvoir disposer plusieurs raccords coudés côte à côte, bien serrés les uns par rapport aux autres.

Le joint annulaire 6 présentant un serrage modéré, il ne subit pas de dommages pendant l'opération de rotation et de fusion, ni par la rotation rapide, ni par la fusion de la matière à l'emplacement de l'arête en raison de la faible durée de la rotation de l'organe 2. Bien entendu, il est avantageux d'éloigner au maximum le joint 6 de l'arête 2a et par conséquent de la zone de fusion.

A la figure 5, on a représenté un mode de réalisation plus détaillé de l'arête circulaire 3a, qui est prévue sur la partie cylindrique 7 de l'organe de liaison 3, ladite arête 3a étant délimitée par l'intersection d'une surface cônique 8 et d'un plan 9 sécant avec l'axe dudit organe.

L'angle de la surface cônique 8 peut varier de 45° à 80° pour favoriser l'emmanchement suivant les matières utilisées pour réaliser le corps 1.

Le diamètre de l'arête 3a est supérieur à celui de la partie cylindrique 7 de manière à créer une tension de la matière du corps 1 lors de l'emmanchement à force. De part et d'autre de l'arête 3a sont prévues les gorges 3b et 3c, pour constituer des zones de remplissage de la matière après sa fusion.

A la figure 6 on a représenté un assemblage dans lequel la pièce tubulaire extérieure 10 est en matière dure et reçoit dans un alésage 11 l'extrémité d'une pièce tubulaire 12 en matière de moindre dureté.

A cet effet, la pièce tubulaire 10 présente une arête intérieure 13a et deux gorges 13b et 13c disposées de part et d'autre de l'arête 13a comme il a été décrit ci-dessus. Ce procédé d'assemblage d'organes qui comporte une opération d'emmanchement à force, suivie d'une rotation entraînant la fusion de la matière, peut être incorporé à un dispositif de montage automatisé étant donné le temps très court de la rotation de l'un des organes.

L'entraînement en rotation de l'organe de liaison 3 peut-être effectué également sur une partie cylindrique maintenue dans une pince de tour ou une pince d'une autre machine rotative.

Bien entendu diverses modifications peuvent être apportées par l'homme de l'art au procédé ou raccord qui viennent d'être décrits uniquement à titre d'exemple non limitatif, sans sortir du cadre de l'invention.

Par exemple, l'invention n'est pas limitée à l'emmanchement ou la matière tendre est une matière plastique, mais à tout assemblage de matières de duretés différentes ou l'une par la rotation entraîne la fusion de l'autre et l'interpénétration. avec suppression des tensions internes (Ex: métal dur sur métal tendre céramique sur métal, etc....)

L'invention ne se limite pas aux raccords pour fluides, mais à tous les cas où il est nécessaire de solidariser de façon indestructible deux pièces de matières et de duretés différentes.

Le procédé suivant l'invention concerne toutes les industries, et plus particulièrement les raccords de fluides, la robinetterie, la chimie, les appareils électriques, l'industrie du plastique, l'automobile, les appareils ménagers, les appareils médicaux et de dentisterie, l'industrie du jouet, la distribution de l'eau sanitaire et d'arrosage etc....

**Revendications**

1. Procédé d'assemblage de deux parties cylindriques de pièces orientables (1, 2, 3) après assemblage, notamment d'un support (1) de raccord de fluide et de ses organes de liaison (2, 3), ces pièces (1, 2, 3) étant constituées de matière de duretés différentes et destinées à être emmanchées l'une dans l'autre en force et de manière étanche; procédé caractérisé en ce qu'il consiste à réaliser sur la pièce la plus dure et sur la partie cylindrique de celle-ci, destinée à l'emmanchement, au moins une arête d'ancrage (2a, 3a) lisse de faible hauteur proportionnelle au diamètre et à l'élasticité de la pièce de moindre dureté, à réaliser autour de chacune de ces arêtes deux gorges de dégagement (2b, 2c, 3b, 3c) à mettre après l'emmanchement, l'une des pièces en rotation par rapport à l'autre, à une vitesse telle qu'elle provoque localement la fusion de la matière la moins dure; cette matière en fusion repoussée par l'arête d'ancrage dont la dureté est telle qu'elle conserve son profil, venant se loger dans les gorges de dégagement assurant ainsi une double fonction de solidarisation et d'étanchéité.

2. Raccord pour fluide comprenant un corps tubulaire (1) dans lequel est monté à l'une de ses extrémités un organe de liaison fileté (2) et à l'autre extrémité un organe de liaison constitué par une douille (3), le corps (1) étant réalisé en une matière de moindre dureté que celle de la douille (3), le montage de ces derniers étant obtenu au moyen du procédé selon la revendication 1; raccord caractérisé en ce que l'organe de liaison (3), qui est une pièce de révolution, présente à sa périphérie une arête circulaire (3a) située entre deux gorges de dégagement (3b, 3c), cette arête (3a) étant délimitée par l'intersection d'une surface conique et d'un plan (9) sécant avec l'axe dudit organe (3).

3. Raccord selon la revendication 2, caractérisé en ce que l'organe (3) comporte un moyen (3d, 3e) destiné à recevoir un moyen amovible (4) d'entraînement en rotation dudit organe (3) à vitesse suffisante pour fondre localement le matériau et le faire fluer dans les gorges de dégagement (3b, 3c).

4. Raccord selon l'une des revendications 1 et 2; caractérisé en ce que l'arête (3a) délimitée par l'intersection de la surface conique (8) et du plan (9) sécant avec l'axe de l'un des organes est ancrée légèrement dans l'autre organe (1) avec une forte tension initiale après emmanchement et avant mise en rotation, et garde son profil initial pendant et après cette opération de rotation.


**Patentansprüche**

1. Verfahren zum Zusammenbauen zweier zylindrischer Teile von nach dem Zusammenbau orientierbaren Elementen (1, 2, 3), insbesondere eines Anschlußträgers (1) für ein Fluid und seiner Verbindungselemente (2, 3), wobei diese Elemente (1, 2, 3) aus einem verschiedene Härte aufweisenden Material bestehen und dazu bestimmt sind, mit dichtem Sitz ineinander eingepreßt zu werden; dieses Verfahren ist dadurch gekennzeichnet, daß es darin besteht, auf dem härteren Teil und auf dem zylindrischen Teil desselben, der für das Einstecken bestimmt ist, wenigstens eine Verankerungskante (2a, 3a), die glatt und von geringer Höhe ist im Verhältnis zu dem Durchmesser sowie die Elastizität des Teils mit geringerer Härte aufweist und um jede dieser Verankerungskanten herum zwei einspringende Rillen (2b, 2c, 3b, 3c) zu bilden, sowie nach dem Einstecken eines der Teile im Verhältnis zu dem anderen in Drehung zu bringen, mit einer derartigen Geschwindigkeit, daß sie örtlich das Schmelzen des Materials von geringerer Härte bewirkt; wobei dieses schmelzende Material von der Verankerungskante zurückgedrängt wird, deren Härte derart ist, daß sie ihr Profil behält, und in die Rillen eingelagert wird, wobei es so eine doppelte Funktion des Verbindens und des Dichtes gewährleistet.

2. Anschluß für ein Fluid mit einem rohrförmigen Körper (1) in welchem an einem seiner Enden ein Verbindungselement (2) mit Gewinde gelagert ist und an dem anderen Ende ein aus einer Buchse (3) bestehendes Verbindungselement gelagert ist, wobei der Körper (1) aus einem Material von geringerer Härte als das der Buchse (3) besteht und wobei das Zusammenbauen dieser Teile mittels des Verfahrens nach Anspruch 1 erfolgt; dieser Anschluß ist dadurch gekennzeichnet, daß das Verbindungselement (3), das ein Umdrehungselement ist, auf seinem Umfang eine sich zwischen zwei einspringenden Rillen (3b, 3c) befindende Kante (3a) aufweist, wobei diese Kante (3a) von dem Schnitt einer kegelförmigen Oberfläche und einer die Achse des obengenannten Elementes (3) schneidenden Ebene (9) begrenzt wird.

3. Anschluß nach Anspruch 2, dadurch gekennzeichnet, daß das Element (3) ein Mittel (3d, 3e) aufweist, das dazu bestimmt ist, ein abnehmbares Mittel (4) für den Drehantrieb des obengenannten Elementes (3) mit einer ausreichenden Geschwindigkeit aufzunehmen, um das Material örtlich zum Schmelzen zu bringen und um es in die Rillen (3b, 3c) fließen zu lassen.

4. Anschluß nach einem der Ansprüche 1 oder 2, dadurch gekennzeichnet, daß die von dem Schnitt der kegelförmigen Oberfläche (8) und der die Achse eines der Elemente schneidenden Ebene (9) begrenzte Kante (3a) leicht in dem anderen Element (1) verankert ist, mit einer starken Anfangsspannung nach dem Einstecken und vor ihrer Drehbewegung, und daß sie ihr Anfangsprofil vor und nach dieser Drehbewegung behält.


**Claims**

1. Method of assembly of two cylindrical parts of pieces (1, 2, 3) which are orientable after assembly, in particular a support (1) of a fluid coupling and of its connection members (2, 3), these pieces (1, 2, 3) being constituted of material of different hardnesses and intended to be fitted one into the other under force in a fluid-tight manner; method characterized in that it consists of producing on the hardest piece and on the cylindrical part thereof, intended for fitting, at least one anchoring ridge (2a, 3a) which is smooth and of low height in proportion to the diameter and to the elasticity of the piece with least hardness, of producing around each of these ridges two disengagement grooves (2b, 2c, 3b, 3c), of setting one of the pieces in rotation in relation to the other after fitting, at a speed such that it causes locally the fusion of the least hard material; this material in fusion repelled by the anchoring ridge, the hardness of which is such that it retains its outline, coming to be housed in the disengagement grooves, thus ensuring a dual function of integration and fluid-tightness.

2. Coupling for fluid comprising a tubular body (1) in which there is mounted at one of its ends a threaded connection member (2) and at the other end a connection member constituted by a socket (3), the body (1) being produced from a material of less hardness than that of the socket (3), the mounting of these latter being obtained by means of the method according to claim 1; coupling characterized in that the connection member (3), which is a rotating piece, has on its periphery a circular ridge (3a) situated between two disengagement grooves (3b, 3c), this ridge (3a) being delimited by the intersection of a conical surface and of a plane (9) intersecting the axis of the said member (3).

3. Coupling according to claim 2, characterized in that the member (3) comprises a means (3d, 3e) intended to receive a removable means (4) of entrainment in rotation of the said member (3) at a sufficient speed to melt the material locally and to cause it to flow in the disengagement grooves (3b, 3c).

4. Coupling according to one of claims 1 and 2; characterized in that the ridge (3a) delimited by the intersection of the conical surface (8) and of the plane (9) intersecting with the axis of one of the members is lightly anchored in the other member (1) with a strong initial tension after fitting and before being placed in rotation, and retains its initial outline during and after this rotation operation.

Fig. 1

Fig. 2

Fig. 3

Fig. 4

Fig. 5

Fig. 6